# EUROPEAN PATENT APPLICATION

(11) **EP 4 620 841 A1**
(43) Date of publication of application: **24.09.2025**
(21) Application number: 22970030.7
(22) Date of filing: 27.12.2022
(51) Int. Cl.: B64U 50/33, B64U 10/16, B64U 50/11, B64U 50/20

(54) **UNMANNED AIRCRAFT**

(71) Applicant: Kubota Corporation, Osaka 556-8601 (JP)
(72) Inventor: KITAGAWA, Hiroshi, Ota-shi, Gunma 379-2304 (JP)
(74) Representative: Cabinet Beau de Loménie
(86) International application number: PCT/JP2022/048179
(87) International publication number: WO 2024/142236

(57) **Abstract**

An unmanned aerial vehicle includes: a plurality of first rotors; at least one second rotor; a plurality of electric motors, each configured to drive a respective one of the plurality of first rotors; an internal combustion engine to drive the at least one second rotor; a battery to store first electric power; an electric generator that is driven by the internal combustion engine to generate second electric power; and a first power control device to control charging and discharging of the battery; and a second power control device to control power generation by the electric generator. Each of the plurality of electric motors receives at least one of the first electric power and the second electric power. The first power control device controls the second power control device.

## Description

### TECHNICAL FIELD

The present disclosure relates to an unmanned aerial vehicle.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

The maximum payload capacity (payload) and flight duration of unmanned aerial vehicles may be insufficient depending on the application, and further improvements are desired.

The present disclosure provides an unmanned aerial vehicle suitable for agricultural applications, capable of increasing payload and/or flight duration.

### SOLUTION TO PROBLEM

The present disclosure provides solutions described in the following items.

### [Item A1]

An unmanned aerial vehicle comprising a plurality of rotors, the unmanned aerial vehicle comprising:
a plurality of first rotors included in the plurality of rotors;
at least one second rotor included in the plurality of rotors;
a plurality of electric motors, each configured to drive a respective one of the plurality of first rotors;
an internal combustion engine to drive the at least one second rotor;
a battery to store first electric power;
an electric generator that is driven by the internal combustion engine to generate second electric power; and
a first power control device to control charging and discharging of the battery; and
a second power control device to control power generation by the electric generator,
wherein each of the plurality of electric motors receives at least one of the first electric power and the second electric power, and
wherein the first power control device controls the second power control device.

### [Item A2]

The unmanned aerial vehicle according to Item A1, wherein the first power control device controls the second power control device according to a state of the battery.

### [Item A3]

The unmanned aerial vehicle according to Item A1, further comprising:
wiring that connects the plurality of electric motors to the electric generator and the battery,
wherein the first power control device controls an electrical connection between the wiring and the battery.

### [Item A4]

The unmanned aerial vehicle according to any one of Items A1 to A3, wherein the first power control device controls the second power control device to adjust an amount of the power generation according to work content of the unmanned aerial vehicle.

### [Item A5]

The unmanned aerial vehicle according to any one of Items A1 to A3, wherein the first power control device controls a state of charge of the battery according to flight conditions including a flight altitude of the unmanned aerial vehicle.

### [Item A6]

The unmanned aerial vehicle according to any one of Items A1 to A5, wherein the first power control device controls a state of charge of the battery according to a distance from the unmanned aerial vehicle to a possible landing point.

### [Item A7]

The unmanned aerial vehicle according to any one of Items A1 to A3, comprising a control device that functions as both the first power control device and the second power control device.

### [Item B1]

An unmanned aerial vehicle comprising a plurality of rotors, the unmanned aerial vehicle comprising:
a power source; and
a power supply that supplies external power from the power source to an implement.

### [Item B2]

The unmanned aerial vehicle according to Item B1, further comprising:
a plurality of electric motors , each driving a respective one of a plurality of first rotors included in the plurality of rotors;
first wiring that supplies power from the power source to each of the plurality of electric motors; and
second wiring that branches from the first wiring and supplies the external power from the power source to the power supply.

### [Item B3]

The unmanned aerial vehicle according to Item B2, wherein the power source includes a battery that stores first electric power.

### [Item B4]

The unmanned aerial vehicle according to Item B2 or B3, further comprising:
at least one second rotor included in the plurality of rotors;
an internal combustion engine that drives the at least one second rotor; and
an electric generator that is driven by the internal combustion engine to generate second electric power,
wherein the power source includes the electric generator, and
wherein the electric generator is connected to the first wiring and the second wiring.

### [Item B5]

The unmanned aerial vehicle according to any one of Items B1 to B4, wherein the implement is an interchangeable implement that performs agricultural work on a field or crops in the field.

### [Item B6]

The unmanned aerial vehicle according to any one of Items B1 to B5, wherein the power supply includes a terminal that supplies power to the implement and a terminal that conducts communication with the implement.

### [Item B7]

The unmanned aerial vehicle according to Item B6, further comprising:
a control device that controls output of the external power from the power supply,
wherein the control device controls supply of the external power according to a current operational state or a planned operational state of the implement obtained through the communication.

### [Item B8]

The unmanned aerial vehicle according to any one of Items B1 to B7, wherein the unmanned aerial vehicle is configured to fly while towing the implement, and
wherein the power supply and the implement are electrically connected by a cable.

### [Item C1]

An unmanned aerial vehicle comprising a plurality of rotors, the unmanned aerial vehicle comprising:
a plurality of first rotors included in the plurality of rotors;
at least one second rotor included in the plurality of rotors;
a plurality of electric motors that respectively drive the plurality of first rotors;
an internal combustion engine that drives the at least one second rotor;
a battery that stores first electric power;
an electric generator that is driven by the internal combustion engine to generate second electric power;
a control device that controls at least one of operation of the internal combustion engine, operation of the electric motors, charging and discharging of the battery, and power generation by the electric generator; and
a power supply that supplies at least a portion of the first electric power and the second electric power as third electric power to an implement,
wherein the control device controls at least one of the operation of the internal combustion engine, the operation of the electric motors, the charging and discharging of the battery, and the power generation by the electric generator according to current operation content or planned operation content of the implement.

### [Item C2]

The unmanned aerial vehicle according to Item C1, wherein the control device starts charging the battery before start of the operation according to the planned operation content of the implement.

### [Item C3]

The unmanned aerial vehicle according to Item C2, wherein the control device adjusts a state of charge or a charge amount of the battery according to the operation content.

### [Item C4]

The unmanned aerial vehicle according to Item C1 or C2, wherein the control device increases an amount of power generation by the electric generator before start of the operation according to the planned operation content of the implement.

### [Item C5]

The unmanned aerial vehicle according to Item C4, wherein the control device adjusts the amount of power generation according to the operation content.

### [Item C6]

The unmanned aerial vehicle according to any one of Items C1 to C5, wherein the control device includes a first power control device to control charging and discharging of the battery and a second power control device to control power generation by the electric generator.

### [Item C7]

The unmanned aerial vehicle according to any one of Items C1 to C6, wherein the control device obtains the current operation content or the planned operation content of the implement from a work plan.

### [Item C8]

The unmanned aerial vehicle according to any one of Items C1 to C6, wherein the control device obtains the current operation content or the planned operation content of the implement from the implement.

### [Item C9]

The unmanned aerial vehicle according to any one of Items C1 to C8, wherein the implement is an interchangeable implement that performs agricultural work on a field or crops in the field.

### [Item C10]

The unmanned aerial vehicle according to any one of Items C1 to C9, wherein the power supply includes a terminal that supplies power to the implement and a terminal that conducts communication with the implement.

### [Item C11]

The unmanned aerial vehicle according to any one of Items C1 to C10,
wherein the unmanned aerial vehicle is configured to fly while towing the implement, and
wherein the power supply and the implement are electrically connected by a cable.

### ADVANTAGEOUS EFFECTS OF INVENTION

According to embodiments of the unmanned aerial vehicle of the present disclosure, it is possible to adjust the generation and utilization of electric power required for motor rotation according to flight conditions or work content.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3A** is a top view schematically showing a multicopter according to an embodiment of the present disclosure.
FIG. **3B** is a side view schematically showing the multicopter according to the present embodiment.
FIG. **4** is a block diagram showing an example of system configuration in the multicopter of the present embodiment.
FIG. **5** is a block diagram showing a configuration example of a battery management device in the present embodiment.
FIG. **6** is a diagram for explaining an overview of an agricultural management system in the present embodiment.
FIG. **7** is a diagram showing an example of work plans for various agricultural work.
FIG. **8** is a diagram showing an example of a settings screen displayed on a terminal device.
FIG. **9** is a side view schematically showing lower limits (first reference values) of target ranges for state of charge (SOC) when the flight altitude of the multicopter in the present embodiment is h4, h3, h2, and h1.
FIG. **10** is a graph schematically showing an example of the relationship between flight altitude of the multicopter and the lower limit (first reference value) of the target range for state of charge (SOC) in the present embodiment.
FIG. **11** is a flowchart showing an example of processing performed by the battery management device in the present embodiment.
FIG. **12** is a flowchart showing an example of external power supply operation in the present embodiment.
FIG. **13** is a graph showing an example of relationships among power consumption of the planned operation of the implement, an amount of power generation, and engine speed in the present embodiment.
FIG. **14** is a block diagram schematically showing the connection state between the power supply and the implement in the present embodiment.
FIG. **15** is a block diagram showing an example of hardware configuration of the control device in the present embodiment.
FIG. **16** is a diagram schematically showing an example of a communication network to which the multicopter in the present embodiment is connected.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

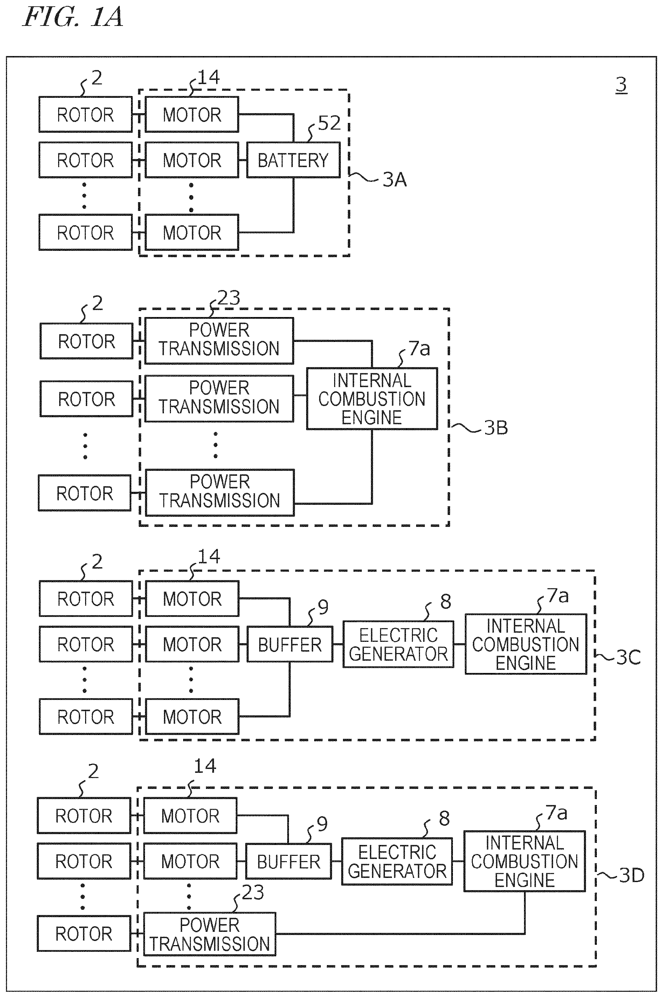

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system 23. The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer 9 that stores electric power to be supplied to each motor **14,** an electric generator 8 such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

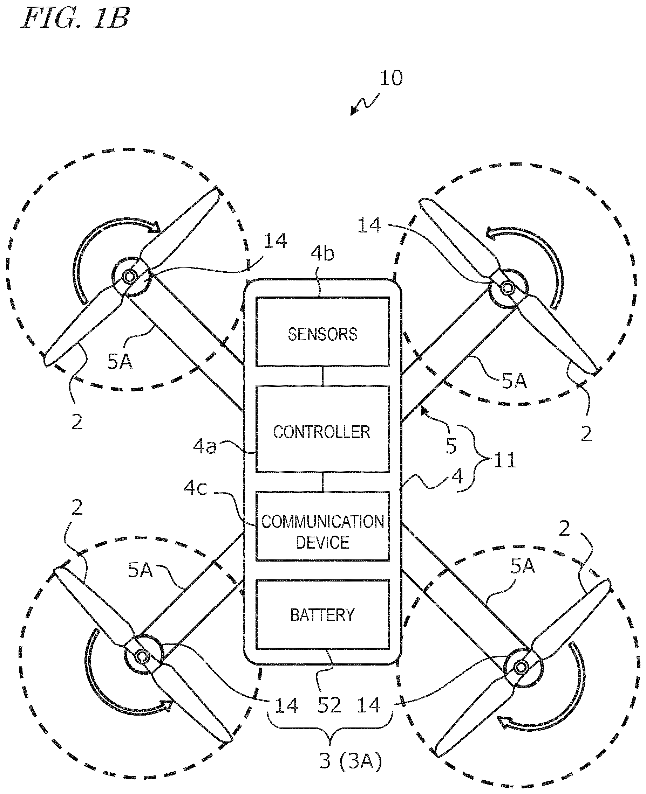

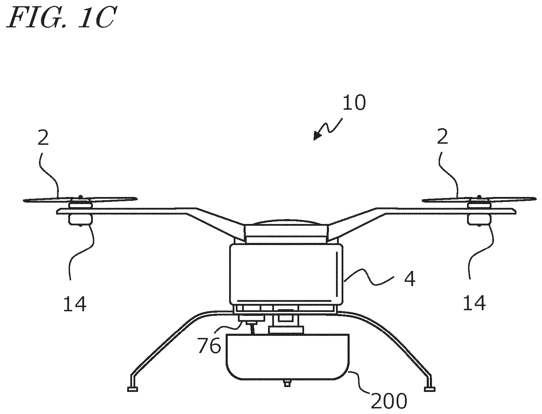

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3 (3A)** includes motors **14** and a battery **52.** FIG. **1C** is a side view schematically showing the multicopter **10.**

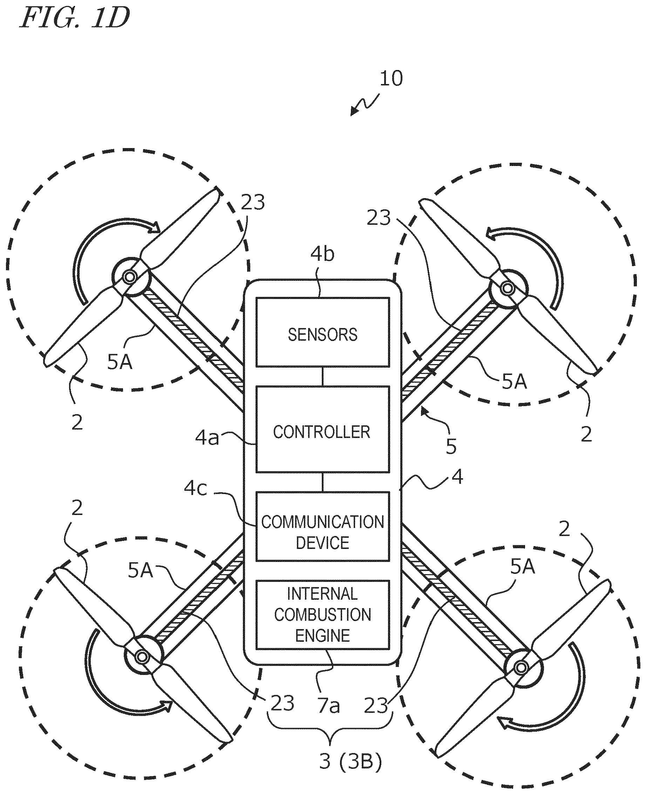

A multicopter **10** shown in Figs. 1**B and 1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors 14, a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

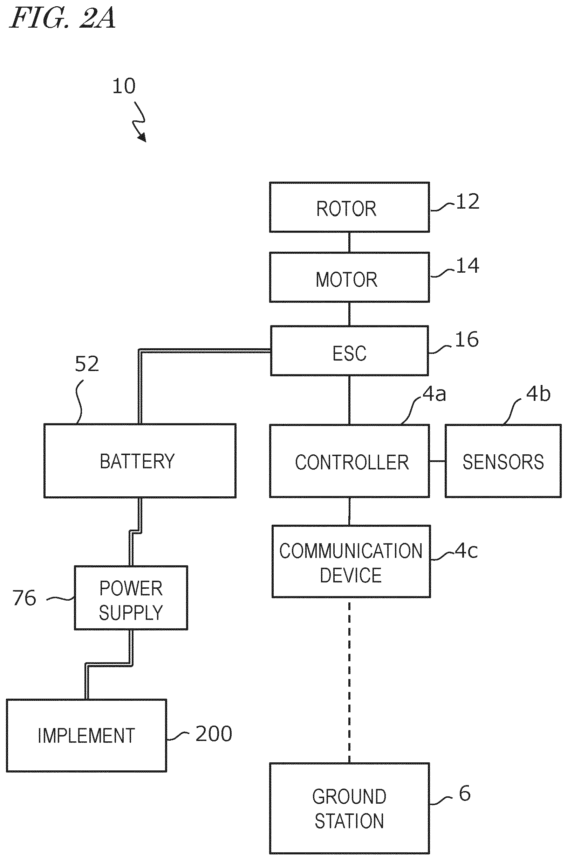

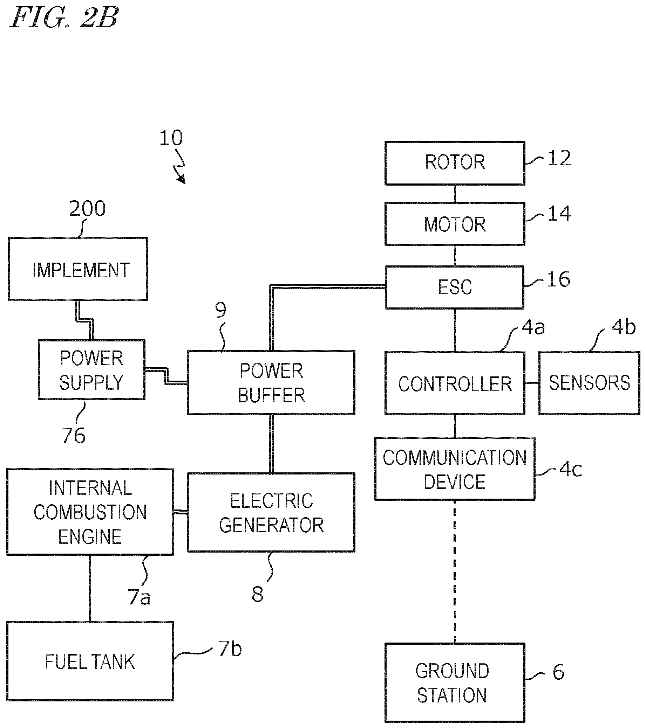

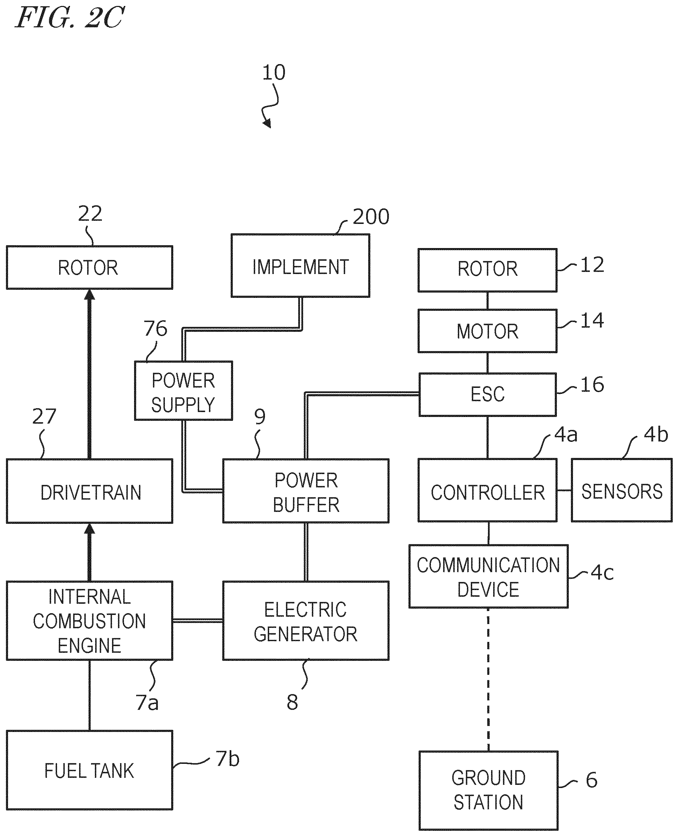

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.** The ESC **16** may be included in the control device **4a.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer 9. The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

The following describes configuration examples and operation examples of an unmanned aircraft according to embodiments of the present disclosure, taking a parallel hybrid drive multicopter as an example.

### <Basic Configuration>

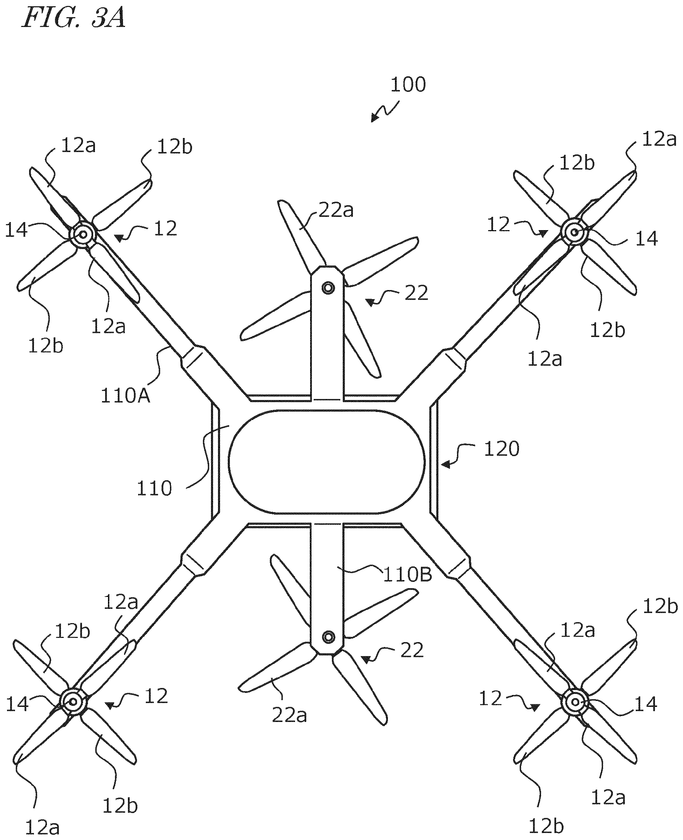

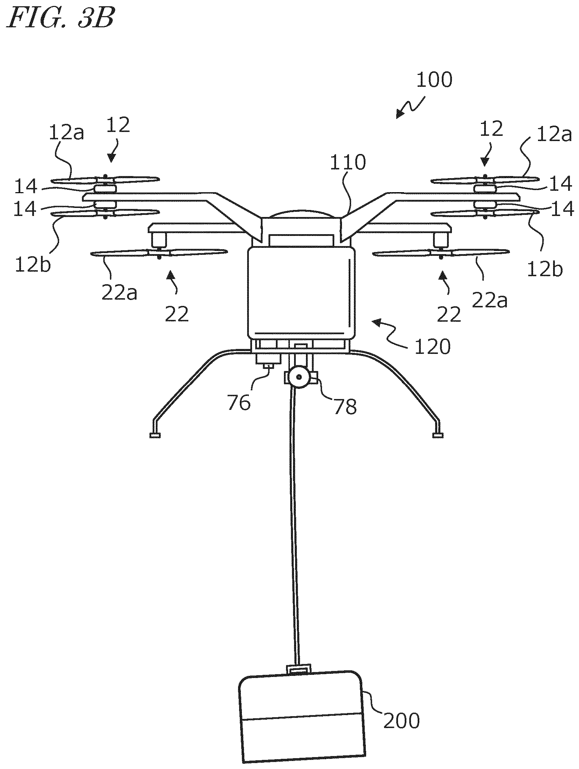

FIG. **3A** is a top view schematically showing a multicopter **100** according to the present embodiment, and FIG. **3B** is a side view thereof. In FIG. **3B****,** an implement **200** connected to the multicopter **100** is shown. The multicopter **100** may be connected with cargo, agricultural materials, other machinery, or containers, cases, or packages capable of accommodating them, together with or in place of the implement **200.** Hereinafter, the weight of the implement **200** and the implement itself may be referred to as "payload". The "connection" between the multicopter **100** and the implement **200** or the like may be made by various instruments or devices.

The multicopter **100** shown in FIG. **3A** includes eight sub-rotors **12** and two main rotors **22.** The sub-rotors **12** include four sets of propellers **12a** and **12b** that rotate in opposite directions on the same axis. Each of propellers **12a** and **12b** includes two blades. The propellers **12a, 12b** are each rotated by motors **14.** The four sets of propellers **12a** and **12b** rotating in opposite directions on the same axis are located at vertices of a quadrilateral. The main rotors **22** include two propellers **22a** rotating in opposite directions at different positions. Each propeller **22a** includes four blades. The eight propellers **12a, 12b** of sub-rotor **12** have the same pitch angle and diameter. The two propellers **22a** of main rotor **22** also have the same pitch angle and diameter. The diameter of propeller **22a** is 1.2 times or more, for example, 1.4 times or more and 2.0 times or less, than the diameter of propellers 12a, 12b.

The multicopter **100** includes a body frame **110** including four arms **110A** for the sub-rotors **12** and two arms **110B** for the main rotors **22.** The body frame **110** supports a main body **120** containing various electronic components and mechanical components described later.

In the example of FIG. **3B****,** the main body **120** includes a power supply **76** and an actuator **78** used for connecting to the implement **200** and other purposes. The power supply **76** is a device that supplies power generated within the main body **120** to the implement **200.** The actuator **78** is a device such as an electric motor that performs operations for connecting the implement **200** to the main body **120** of the multicopter **100.** In the example of FIG. **3B****,** the actuator **78** drives a mechanism for winding up a cable connecting the main body **120** and the implement **200.** This cable may include a power line for supplying power (external power) to the implement **200** from the multicopter **100,** and a communication line for communication between the multicopter **100** and the implement **200.**

### <System Configuration>

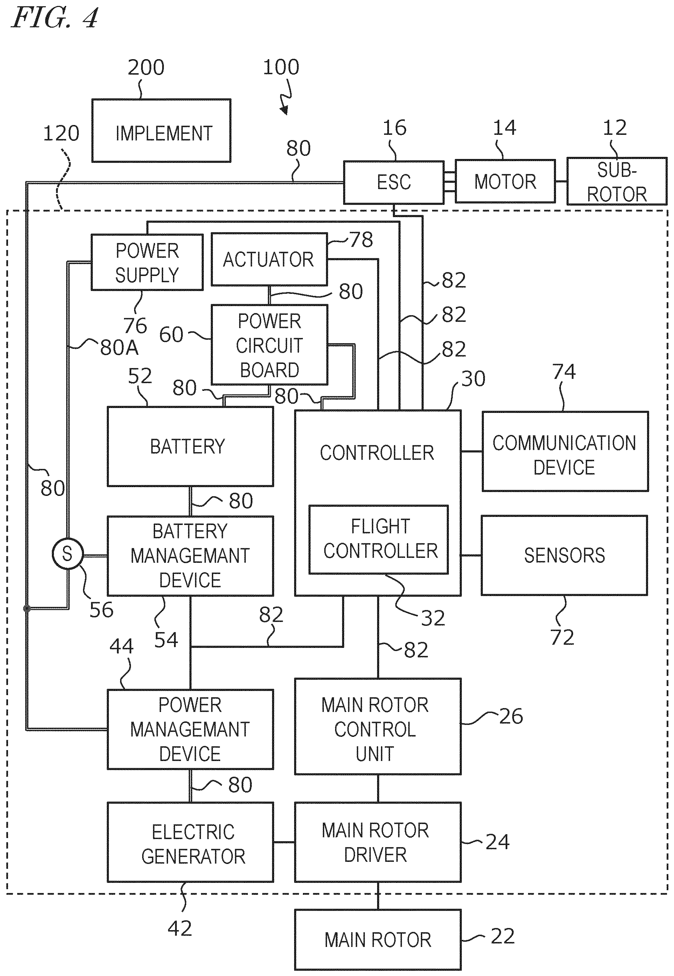

FIG. **4** is a block diagram showing an example of the system configuration of the multicopter **100** according to the present embodiment.

In the illustrated example, the main body **120** of the multicopter **100** includes a control device **30** containing a flight controller **32,** sensors **72,** and a communication device **74.** This is basically similar to the control device **4a,** sensors **4b,** and communication device **4c** included in the main body **4** of the multicopter **10** explained with reference to FIG. **1A****.**

The multicopter **100** according to the present embodiment includes eight sub-rotors **12,** eight motors **14** that respectively rotate the eight sub-rotors **12,** and eight ESCs that respectively control the eight motors **14.** Each ESC **16** receives a motor control signal for controlling the motor **14** from the control device **30** via wiring **82.** The motor control signal is, for example, a PWM (Pulse Width Modulation) signal. When the motor control signal is a PWM signal, the duty cycle of the PWM signal may indicate an analog value of the motor rotation speed. Each ESC **16** controls the rotation speed of the motor **14** connected to that ESC **16** based on the motor control signal from the control device **30.** In FIG. **4****,** for simplicity, one set of "sub-rotor **12,** motor **14** and ESC **16"** is shown, but the multicopter **100** according to the present embodiment includes eight sets of "sub-rotor 12, motor **14** and ESC **16".** The number of these sets is not limited to eight.

The control device **30** is connected to individual ESCs **16** via electrically independent wiring **82** and may individually control each of the eight ESCs **16.** As mentioned earlier, the sub-rotor **12** is used not only for generating lift but also for attitude control. Attitude control is achieved by the flight controller **32** of the control device **30** obtaining measured or estimated values indicating the attitude of the main body **120** from the sensors **72** to determine the current attitude of the main body **120,** and controlling the rotation speed of individual motors **14** according to the difference from the target attitude.

The main body **120** includes a main rotor driver **24** that drives the main rotor **22** and a main rotor control unit **26** that controls the main rotor drive component **24.** In this embodiment, the main rotor drive component **24** is an internal combustion engine. Therefore, the main rotor control unit **26** includes an Engine Control Unit (ECU). The main rotor control unit **26** is configured to execute control of the internal combustion engine by acquiring sensor data such as throttle opening, intake temperature, engine speed, and temperature of various portions of the main rotor drive component **24,** which is an internal combustion engine. The main rotor control unit **26** is connected to the control device **30** via wiring **82** such as a CAN (Controller Area Network) bus. The main rotor control unit **26** is configured to output engine control signals based on signals transmitted from the control device **30.** The engine control signal includes, for example, throttle opening. A digital-to-analog converter (DAC) and/or voltage converter may be connected between the control device **30** and the main rotor control unit **26.** Mechanical devices such as a clutch and reduction gear may be provided between the main rotor driver **24** and the main rotor **22.**

The main rotor driver **24** preferably is an internal combustion engine with minimal vibration. In this embodiment, the main rotor driver **24** is, for example, an opposed piston engine. The opposed piston engine is disclosed in, for example, Japanese Patent No. 5508604. The entire contents of Japanese Patent No. 5508604 are hereby incorporated by reference.

The main rotor driver **24,** which is an internal combustion engine, may drive an electric generator **42** such as an alternator to generate power. In this embodiment, the electric generator **42** has the structure of an AC synchronous motor including a rotor and a stator. Therefore, the electric generator **42** may also function as a "starter" by rotating the rotor through energization during startup of the main rotor driver **24.** The electric generator **42** rectifies the alternating current generated by power generation to convert it to direct current. The electric generator **42** generates direct current power required for driving the motor **14** and supplies it to each ESC **16** via wiring **80.** The electric generator **42** is configured to output, for example, a direct current voltage of 250V or higher. Note that the wiring **80** is power wiring, and the wiring **82** is signal wiring. Each of wirings **80** and **82** includes a plurality of conductors.

The electric generator **42** is connected to a power management device **44.** The power management device **44** is connected to the control device **30** and a battery management device **54** to be described later. The power management device **44** may control the amount of power generation by the electric generator **42** based on signals from the control device **30** or the battery management device **54.** This amount of power generation may be variably controlled by the power management device **44** according to the power required by the motor **14** and battery **52,** even when the engine speed of the main rotor driver **24,** which is an internal combustion engine, is in a constant state.

The main body **120** further includes a battery **52** including a plurality of cells of, for example, lithium-ion secondary batteries connected in series or parallel, and a battery management device **54** that controls charging and discharging of the battery **52.**

The battery **52** may receive direct current power from the electric generator **42** via a power switch **56** and be charged by that power. The operation of the power switch **56** may be controlled by the battery management device **54** and the control device **30.** The battery management device **54** is a device that measures or estimates parameter values defining the state of battery **52,** such as current flowing through battery **52,** cell voltage, cell balance, State Of Charge (SOC), State Of Health (SOH), and temperature.

The battery management device **54** may control the power switch **56** according to the state of the battery **52.** For example, when the battery **52** is in a state requiring charging, the battery management device **54** electrically connects the electric generator **42** and battery **52** by means of the power switch **56,** and supplies power from the electric generator **42** to the battery **52** to execute charging operation. At this time, the battery management device **54** may control the power management device **44** and increase the amount of power generation by the electric generator **42** so that the power supplied to ESC **16** does not fall below a desired level. In contrast, when the battery **52** is in a state not requiring charging, the battery management device **54** disconnects the electrical connection between the electric generator **42** and battery **52** by the power switch **56,** thereby stopping the charging of the battery **52.**

In this embodiment, the battery **52** has a power storage capacity that allows, even when power generation by the electric generator **42** stops for some reason and lift from the main rotor **22** is lost, continued generation of lift and attitude control by the sub-rotor **12** to fly to a location where landing is possible and land there. In other words, when the multicopter **100** according to this embodiment is flying normally, the power required to drive the sub-rotor **12** can be supplied to ESC **16** from the electric generator **42** rather than from the battery **52.** Therefore, even when increasing payload and flight duration, there is little need to increase the power storage capacity of battery **52** accordingly.

The power stored in battery **52** may be output as, for example, a direct current voltage of 250V or higher. However, this direct current voltage decreases with decreasing state of charge. Therefore, when the state of charge falls below a predetermined level, the battery management device **54** operates to supply part of the direct current power from the electric generator **42** to battery **52** to charge battery **52.**

The battery **52** is connected to a power circuit board **60.** The power circuit board **60** has the function of stepping down the voltage output from battery **52** to, for example, 24V, 12V, and 5V. The direct current voltage output from battery **52** is converted to a desired voltage by the power circuit board **60** before being supplied to other electronic components. In the example of FIG. **4****,** power stepped down by the power circuit board **60** is supplied to the control device **30** and actuator **78** via wiring **80.**

In the example shown in FIG. **4****,** while the power management device **44** and battery management device **54** are separate components, a single control device (computer or ECU) may function as both the power management device **44** and battery management device **54.**

In the example of FIG. **4****,** the power supply **76** is electrically connected to the electric generator **42** or battery **52** via the power switch **56.** The power supply **76** in this example is configured to supply power (external power) generated within the main body **120** to external machines and devices such as the implement **200.**

The main body **120** may have configurations not shown in FIG. **4****.** For example, the main body **120** may include a fuel tank for storing fuel required for operation of the main rotor driver **24,** water-cooled or air-cooled devices for cooling the main rotor driver **24,** and electrical equipment such as lighting devices and electric pumps. The electrical equipment may operate on power stepped down to a predetermined voltage by the power circuit board **60.** Additionally, a battery (auxiliary battery) for electrical equipment may be provided and configured to supply power to the electrical equipment. Such an auxiliary battery may be charged from the battery **52** or the electric generator **42.**

In this embodiment, the motor **14** functions as a plurality of "attitude control devices" that respectively drive a plurality of first rotors (sub-rotors) **12.** Additionally, the main rotor driver **24,** which is an internal combustion engine, functions as a "main thrust generating device" that drives the second rotor (main rotor) **22.**

In this embodiment, the control device **30** may vary the ratio (power ratio) between the first drive power output from a plurality of motors **14** and the second drive power output from the main rotor driver **24.** This point will be explained in detail below.

Generally, the responsiveness of motor **14** is superior to that of internal combustion engines. Regarding the torque required for rotation of rotors **12, 22,** when the time from the input of a torque command signal to the achievement of the torque target value is called the "response time," the response time of motors is, for example, about 1/100 of that of internal combustion engines. Therefore, to control the attitude of the multicopter **100,** it is desirable to detect the difference between the current value and target value of the attitude angle of the multicopter **100,** and control the rotation speed of each of the plurality of sub-rotors **12** with high response speed to reduce this difference. An increase in rotor rotation speed generates an increase in thrust. By adjusting the thrust of each of the plurality of sub-rotors **12,** it is possible to control the attitude of the multicopter **100** with high precision and quickly.

In contrast, internal combustion engines efficiently generate large thrust. While the rotation of sub-rotor **12** is performed using power generated by the power of the main rotor driver **24,** which is an internal combustion engine, energy loss occurs when converting mechanical energy to electrical energy. Therefore, from the viewpoint of improving energy consumption efficiency, it is preferable that the main rotor driver **24** be used for main thrust generation by rotating the main rotor **22.** Additionally, to increase the thrust of main rotor **22,** it is preferable that the diameter of main rotor **22** be larger than the diameter of each of the plurality of first rotors **12.**

However, when the main rotor **22** for main thrust generation is generating large thrust, that large thrust and rotational moment may, conversely, inhibit the attitude control function of the sub-rotors **12.** As a result, even when using the plurality of motors **14** with superior responsiveness to rotate the plurality of sub-rotors **12,** delays in attitude control response may occur. In contrast, while lowering the rotation speed of the main rotor **22** improves attitude control performance, energy consumption efficiency decreases.

In battery-powered multicopters, various algorithms are used to adjust the torque of each of the plurality of motors to balance the thrust of each rotor and control to a desired attitude. When performing attitude control with the plurality of motors in such case, adding a rotor rotated by an internal combustion engine may complicate the calculations needed for attitude control. To avoid such complications, it is effective to fix the "ratio" between the drive power output from the plurality of motors and the drive power output from the internal combustion engine. Therefore, in conventional parallel hybrid types, a control method that fixes this ratio has been adopted.

However, as a result of studies by the present inventors, it was discovered that when using the multicopter 100 for agricultural work, for example, it is preferable to make the above "ratio" variable rather than fixed, compared to when flying the multicopter **100** for simple logistics or surveillance purposes. This is because when flying for agricultural purposes, the multicopter **100** operates under various different conditions, such as various agricultural work (ground work) within fields, movement between a plurality of fields, and transport of agricultural materials or harvested crops, and due to these conditions, the required response speed level for attitude control changes significantly. Additionally, when connecting implements with diverse weights and shapes selected according to the content of agricultural work, the required lift and precision of attitude control may also change significantly.

### <Power Control>

In this embodiment, each of the plurality of motors **14** may operate by receiving at least one of power (first power) from the battery **52** and power (second power) from the electric generator **42.** The battery **52** and the electric generator **42** function as "power sources". Each of the plurality of motors **14** is connected to wiring **80** that supplies power from the power sources (the electric generator **42** and the battery **52).** Power may also be supplied from the power sources to devices other than the motors **14.** The wiring (second wiring) **80A** branching from the wiring (first wiring) **80** electrically connects the power source and the power supply **76,** enabling power supply from the power source to the implement **200.**

In this embodiment, the battery management device **54** functions as a first power control device that controls charging and discharging of the battery **52,** and the power management device **44** functions as a second power control device that controls power generation by the electric generator **42.** And the first power control device, namely the battery management device **54,** is configured to control the second power control device, namely the power management device **44.**

The multicopter **100** according to this embodiment, by including a battery management device **54** and power management device **44,** enables at least one of the following control operations:
(1) The first power control device, namely the battery management device **54,** controls the second power control device, namely the power management device **44,** according to the state of battery **52.**
(2) The first power control device, namely the battery management device **54,** controls the power management device **44** to adjust the amount of power generation according to the work content of multicopter **100.**
(3) The first power control device, namely the battery management device **54,** controls the state of charge of battery **52** according to flight conditions including the flight altitude of multicopter **100.**
(4) The first power control device, namely the battery management device **54,** controls the state of charge of battery **52** according to the distance from multicopter **100** to a possible landing point.

Below, examples of the above control operations by the battery management device **54** will be explained.

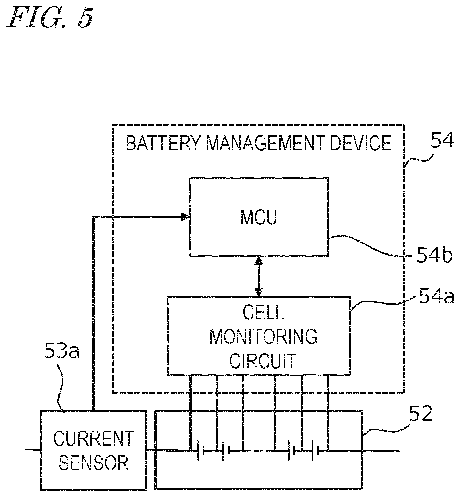

First, referring to FIG. **5****,** an example configuration of the battery management device **54** will be explained. FIG. **5** is a block diagram showing an example configuration of the battery management device **54.** In the illustrated example, the battery management device **54** includes a cell monitoring circuit **54a** that monitors the state (voltage and temperature, and other parameters) of each of a plurality of single cells (cells) included in the battery **52,** and a microcontroller (Microcontroller Unit: MCU) **54b** that estimates the state of the battery **52** and executes battery management operations.

The cell monitoring circuit **54a** may be configured to measure the voltage of each cell and execute cell balancing during charging. The cell monitoring circuit **54a** may include a protection circuit that prevents overcharging and over-discharging of each cell. Such protection circuits may be provided in battery packs that each include a plurality of cells.

The MCU **54b** may obtain current measurement values from a current sensor **53a** that measures current flowing through the battery **52.** It may also obtain various sensor data such as temperature measurements of battery **52** from other sensors. The battery management device **54** may be programmed to execute various calculations for estimating, for example, the state of charge (SOC) of the battery **52.** The state of charge (SOC) is one of the state variables that define the state (charging state) of the battery **52.** The parameters defining the state of the battery **52** are not limited to state of charge and may include variables such as charge amount (remaining charge), cell voltage, battery temperature, State Of Health (SOH), and Full Charge Capacity (FCC).

As shown in FIG. **4****,** the battery management device **54,** functioning as the first power control device, may control the electrical connection state between wiring **80** connecting the electric generator **42** to the motor **14** and the battery **52.**

### <(1) Control of Power Management Device According to Battery State>

The battery management device **54** may control the second power control device, namely the power management device **44,** according to the state of battery **52.**

For example, when the state of charge (SOC) of battery **52** is equal to or higher than a first reference value (for example, 60%), the battery management device **54** controls the power management device **44** to supply power from the electric generator **42** to motor **14** without charging battery **52** from the electric generator **42.In** contrast, for example, when the state of charge (SOC) of battery **52** falls below the first reference value, the battery management device **54** controls the power management device **44** to charge the battery **52** from the electric generator **42.** This charging may be continued until the state of charge (SOC) of battery **52** reaches a second reference value (for example, 90%).

The above operation is just one example. For example, the first reference value may be 80% and the second reference value may be 90%. The first reference value and second reference value need not be fixed values.

### <(2) Control of Power Management Device According to Work Content>

The battery management device **54** may control the power management device **44** to adjust the amount of power generation according to the work content of multicopter **100.** The work content of multicopter **100** is defined by a work plan. Then, an implement **200** selected according to the content of the work may be connected to the multicopter **100.** Details of the work plan will be described below.

The work plan includes information about one or more agricultural works to be executed by the multicopter **100.** When work is performed by a plurality of multicopters **100,** different work plans may be generated for each multicopter **100.** The work plan includes information about one or more agricultural works to be executed by each multicopter **100,** and information about the fields where each agricultural work is performed. The work plan may include information about a plurality of agricultural works to be executed by each multicopter **100** over a plurality of work days, and information about the fields where each agricultural work is performed. More specifically, the work plan may be a database including schedule information indicating, for each day, at what time, which multicopter will perform which agricultural work, in which field. Therefore, for example, when a work plan is given to the control device **30** of the multicopter **100,** the control device **30** can obtain information about how the power consumption of multicopter **100** and the implement **200** will change as the work starts and progresses. In this embodiment, according to the work content defined by the work plan, in other words, in response to changes in power consumption, the battery management device **54** may control the power management device **44.** Specifically, when there is not enough power remaining in battery **52** at a sufficient level to supply the necessary power consumption to perform the work, the battery management device **54** is configured to control the power management device **44** to increase the amount of power generation to raise the state of charge of battery **52.**

Below, an example of a work plan defining the work content of multicopter **100** (and implement **200)** will be explained in detail. In this embodiment, the work plan may be generated by a management system (agricultural management system) for multicopter **100.**

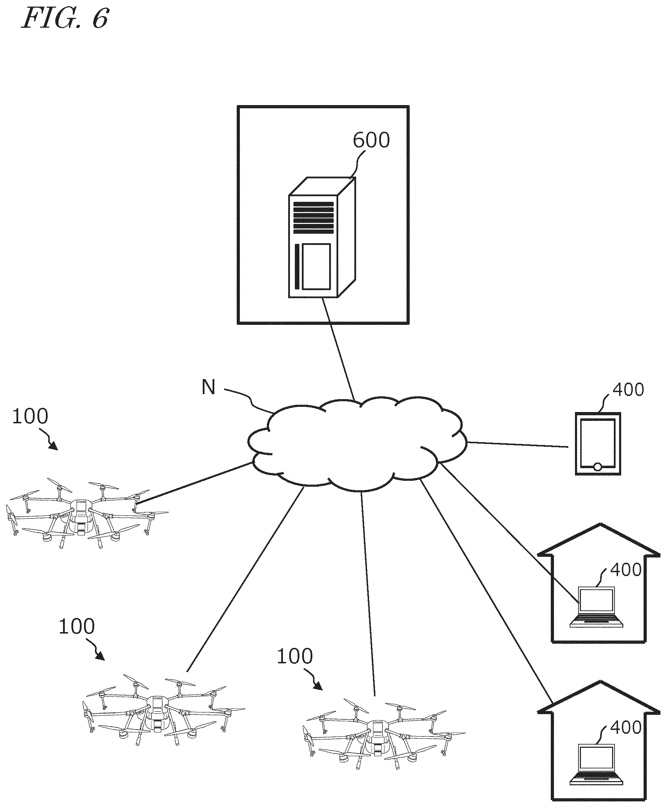

FIG. **6** is a diagram explaining an example of an agricultural management system that may be utilized in this embodiment. The agricultural management system shown in FIG. **6** includes a plurality of multicopters **100** and a management device **600.** FIG. **6** also shows a plurality of terminal devices **400** used by a plurality of users. The management device **600** is a computer managed by an operator running the agricultural management system. The multicopter **100,** terminal device **400,** and management device **600** are configured to communicate with each other via a communication network **N.** While FIG. **6** illustrates three multicopters **100** as examples, the agricultural management system may include two or fewer, or four or more multicopters **100.** The agricultural management system may include not only multicopter **100** but also various types of agricultural machines such as tractors, rice transplanters, combines, and the like. Each multicopter **100** may execute assigned agricultural work in designated fields according to instructions from the management device **600.** Note that operation of multicopter **100** may be primarily conducted by users (operators) from the ground, in which case the management device **600** may be used for generating work plans by users or other people.

The agricultural management system shown in FIG. **6** may be suitably utilized for managing agricultural work using a plurality of multicopters **100** that fly automatically or manually. The management device **600** may generate work plans for each multicopter **100** based on information indicating outline plans for agricultural work input by each user using their respective terminal devices **400,** and plan routes for each multicopter **100** based on those work plans. The management device **600** may be a collection of a plurality of computers. For example, the management device **600** may include a computer that generates work plans for each multicopter **100** and a computer that plans routes for each multicopter **100.**

The management device **600** determines routes that each multicopter **100** should move along to execute specified agricultural work (for example, tilling, seeding, planting, pest control, fertilizing, harvesting, and other work contents). The management device **600** generates routes on maps that each multicopter **100** should move along by referring to maps of the areas where each multicopter **100** moves, and transmits that route information to each multicopter **100** or user's terminal device **400.** The multicopters **100** capable of automatic flight move based on the received route information and execute specified agricultural work in their assigned fields. In the case of manually flown multicopters **100,** users can operate multicopter **100** based on route information received at terminal device **400.**

In this embodiment, since the multicopter **100** may install or tow an implement **200,** the multicopter **100** can fly over fields while performing agricultural work according to the type of the implement **200.** The multicopter **100** also moves between fields, or fly between storage facilities and fields.

In a preferred embodiment, the multicopter **100** has an automatic flight capability. That is, the multicopter **100** can fly without manual operation, through the operation of the control device **30.** In a preferred embodiment, the multicopter **100** can fly automatically or by remote control not only above fields but also above areas outside the fields.

In the present embodiment, the control device **30** of the multicopter **100** may automatically fly the multicopter **100** based on the position of the multicopter **100** and information about the target path generated by the management device **600.** The control device **30** may control not only the flight control of the multicopter **100** but also the operation of the implement **200.** This enables the multicopter **100** to automatically fly within the field while performing agricultural work using the implement **200.** During flight, the multicopter **100** generates local paths for avoiding obstacles along the target path based on sensor data output from sensors **72** such as imaging devices or LiDAR sensors.

The management device **600** may be a server computer that, for example, centrally manages information about fields and agricultural work in the cloud and supports agriculture by utilizing cloud data. The management device **600,** for example, generates work plans for each multicopter **100** and performs global path planning for each multicopter **100** according to that work plan.

The management device **600** generates target paths in fields based on information about the fields. For example, the management device **600** may generate target paths within fields based on various information such as pre-registered field shapes, field areas, field entrance/exit locations, size of the multicopter **100,** model or size of the implement **200,** work content, crop type, crop growth area, crop growth status, or spacing between crop rows or ridges. The management device **600** may generate target paths within fields based on information input by users using terminal devices **400** or other devices. The management device **600** generates paths within fields to cover, for example, the entire work area where work is to be performed.

The terminal device **400** is a computer used by users who are located away from the multicopter **100.** The terminal device **400** may be a mobile terminal such as a laptop computer, smartphone, or tablet computer as shown in FIG. **6****,** or may be a stationary computer such as a desktop PC (personal computer). The terminal device **400** displays a settings screen on its display for users to input information necessary for generating work plans (for example, schedules for each agricultural work). When the user inputs the necessary information on the settings screen and performs a transmission operation, the terminal device **400** transmits the input information to the management device **600.** The management device **600** generates work plans based on this information. The terminal device **400** may also be used for registering one or more fields where the multicopter **100** will perform agricultural work.

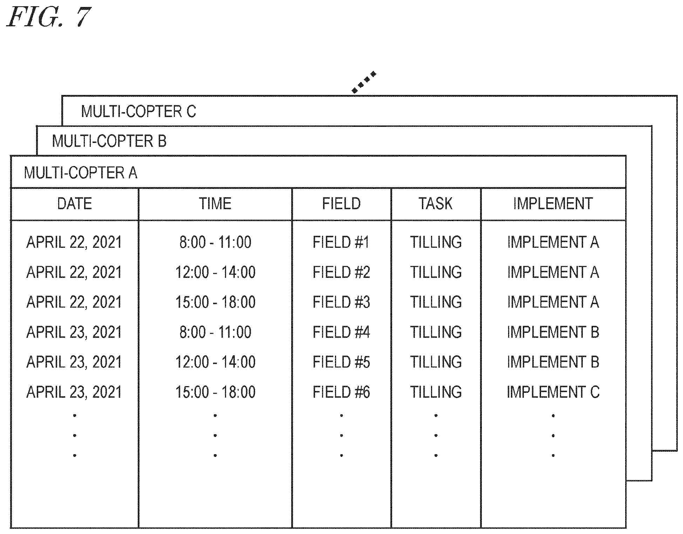

FIG. **7** shows an example of work plans for each multicopter **100.** In this example, the work plan includes information indicating, for each registered multicopter **100,** the dates and times when agricultural work will be performed, the fields, work content, and the implements **200** to be used. The work plan is not limited to the format shown in FIG. **7** and may include other information related to the work. For example, information such as types or application amounts of agricultural chemicals or fertilizers may be included in the work plan. According to such work plans, the processor of the management device **600** generates paths for each multicopter **100** on each work day and issues instructions for agricultural work to each multicopter **100.** The work plan may be downloaded by the control device **30** of the multicopter **100** and stored in the storage device **37** described later. In that case, the control device **30** may autonomously initiate operations according to the schedule shown in the work plan stored in the storage device **37.**

The management device **600** may generate work plans based not only on information indicating approximate timing of agricultural work, but also on information input by each user using the terminal device **400.** For example, the management device **600** may generate work plans based on information indicating rough plans for each type of agricultural work in one or more fields managed by each user.

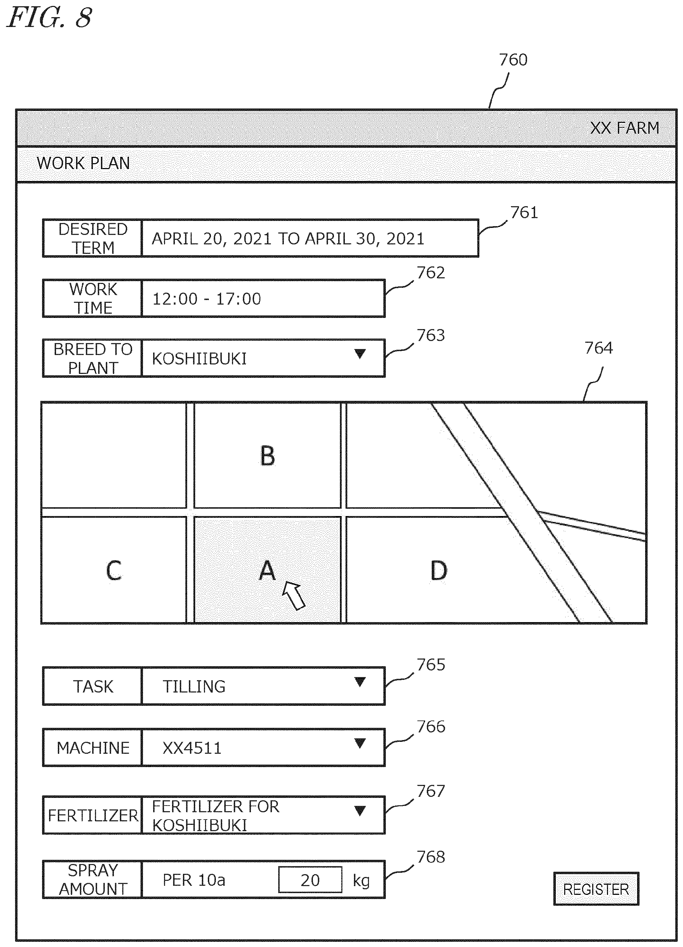

FIG. **8** shows an example of a settings screen **760** displayed on the display screen of the terminal device **400.** The processor of the terminal device **400** launches application software for generating work plans in response to user operation using an input device, and causes the display screen to display a settings screen **760** as shown in FIG. **8****.** Users can input rough plan information necessary for generating work plans on this settings screen **760.**

FIG. **8** shows an example of the settings screen **760** for when tilling with fertilizer application is performed in a field for rice cultivation. The settings screen **760** is not limited to what is shown and may be modified as appropriate. The settings screen **760** in the example of FIG. **8** includes a period setting section **761,** time setting section **762,** planting variety selection section **763,** field selection section **764,** work selection section **765,** machine selection section **766,** fertilizer selection section **767,** and application amount setting section **768.**

The period setting section **761** displays the period input by the user. The user inputs the desired period for executing the agricultural work. Days included in the input period are set as candidate dates for agricultural work.

The time setting section **762** displays the work hours input by the user. The user inputs the desired work hours for executing the agricultural work. The work hours are specified by start time and end time. The input work hours are set as candidates for when the agricultural work will be performed.

The planting variety selection section **763** displays a list of crop varieties to be planted (that is, to be set in the ground). Users may select desired varieties from the list. In the example of FIG. **8****,** the rice variety "Koshiibuki" is selected.

The field selection section **764** displays fields on a map. Users may select any field from the displayed fields. In the example of FIG. **8****,** the portion indicating "Field A" is selected. In this case, the selected "Field A" is set as the field where agricultural work will be performed. Users may also select a plurality of fields simultaneously.

The work selection section **765** displays a plurality of agricultural works necessary for cultivating the selected crop. Users may select one agricultural work from among the plurality of agricultural works. In the example of FIG. **8****,** "tilling" is selected from among the plurality of agricultural works. In this case, the selected "tilling" is set as the agricultural work to be executed.

The machine selection section **766** is a portion for setting the multicopter to be used in that agricultural work. The machine selection section **766** may display, for example, types or models of multicopters previously registered by the management device **600,** and types or models of implements **200** that can be used. Users may select specific machines from among the displayed machines. In the example of FIG. **8****,** an implement **200** with model number "XX4511" is selected. In this case, that implement **200** is set as the machine to be used in the agricultural work.

The fertilizer selection section **767** displays names of a plurality of pre-registered fertilizers. Users may select specific fertilizers from among the plurality of fertilizers displayed. The selected fertilizer is set as the fertilizer to be used in the agricultural work.

The application amount setting section **770** displays numerical values input from the input device **420.** The input numerical value is set as the application amount.

On the settings screen **760,** when the intended period, work hours, planting variety, field, work, fertilizer, and application amount are input and "Register" is selected, the communication device of the terminal device **400** transmits the input information to the management device **600.** The processor of the management device **600** stores the received information in the storage device.

It should be noted that the information on agricultural work managed by the management device **600** is not limited to what has been described above. For example, the settings screen **760** may be configured to allow setting of types and application amounts of agricultural chemicals to be used in the field. Information regarding agricultural works other than those shown in FIG. **8** may also be made settable.

The management device **600** generates work plans for agricultural work to be executed by each multicopter **100** based on information received from each user's terminal device **400** and other sources. For example, the management device **600** determines the actual work dates and work hours for agricultural work to be executed by each multicopter **100.** For example, the management device **600** determines the dates and times for executing agricultural work in each field by comprehensively considering the number, distribution, and usage status of multicopters **100,** the distribution of fields where agricultural work is performed in that region, the work dates and times desired by each user, and the approximate timing guidelines for work in that region. Algorithms utilizing artificial intelligence (AI) such as deep neural networks may be used to determine the dates and times for executing agricultural work in each field. The management device **600** notifies the terminal devices **400** used by users of the determined dates and times for executing agricultural work. When the determined dates and times for execution differ from those desired by users, information in that regard may be notified. The management device **600** executes path planning for each multicopter **100** for each work day based on the determined dates and times for executing agricultural work in each field.

With such a work plan generated by the management system described above, the battery management device **54** of the present embodiment can efficiently control the power management device **44** to increase and decrease the amount of power generation. Specifically, as described later, the amount of power generation can be increased in synchronization with the operation of the implement **200.**

Additionally, with a work plan, the battery management device **54** of the present embodiment can efficiently control the power management device **44** to increase and decrease the amount of power generation while monitoring the state (particularly the state of charge) of the battery **52.** Specifically, as described later, the amount of power generation can be increased immediately before the implement **200** starts operation. Since batteries **52** such as lithium-ion batteries tend to deteriorate when kept in a fully charged state, the process of increasing the state of charge in conjunction with the start of work by the implement **200** is also effective for extending the life of the battery **52.** Such a control of state of charge is explained below.

### <(3) Control of State of Charge According to Flight Conditions of Multicopter and Other Factors>

For example, when the state of charge (SOC) of the battery **52 is** at or above a first reference value (for example, 60%), the battery management device **54** controls the power management device **44** to supply power from the electric generator **42** to the motors **14** without charging the battery **52.** In contrast, when the state of charge (SOC) of the battery **52** falls below the first reference value, for example, the battery management device **54** executes charging of the battery **52** from the electric generator **42.** This charging may be configured to continue until the state of charge (SOC) of the battery **52** reaches a second reference value (for example, 90%).

The above operation is just one example. For instance, the first reference value may be 80% and the second reference value may be 90%. The first reference value and second reference value need not be fixed.

The battery management device **54** is configured to control the state of charge of the battery **52** according to flight conditions including the flight altitude of the multicopter **100.** Flight conditions are various parameters that determine the power consumption per unit time (power consumption) consumed by the multicopter **100** during flight, such as flight altitude, flight speed, wind direction and wind speed during flight, and payload size (weight). In the present embodiment, the control device **30** calculates an estimated value of power consumption based on the parameters that define the flight conditions described above. In the present embodiment, the battery management device **54** is configured to determine whether it is possible to descend and land at a possible landing point using only the power currently stored in the battery **52,** based on the estimated power consumption obtained from the control device **30.** When it determines that it is not possible to descend and land at the possible landing point using only the power currently stored in the battery **52,** the battery management device **54** initiates charging operations to increase the state of charge of the battery **52.** This means increasing the first reference value as described above. Such modification of the first reference value may be executed according to the content of work performed by the multicopter **100,** as power consumption varies depending on the work content. Details of the work content of the multicopter **100** will be described later.

The range with the first reference value as the lower limit and the second reference value as the upper limit is the "target range" for state of charge control performed by the battery management device **54.** This target range is preferably varied according to flight status or work status as described above. For example, when the battery **52** is used as an emergency backup power source in case the electric generator **42** fails, the power stored in the battery **52** (first power) only needs to be large enough to enable descent and landing on the ground without using power (second power) generated by the electric generator **42.** In such case, the power stored in the battery **52** (first power) may be smaller when the flight altitude is lower. Therefore, for example, the lower limit (first reference value) of the target range for the state of charge (SOC) may be varied according to the flight altitude.

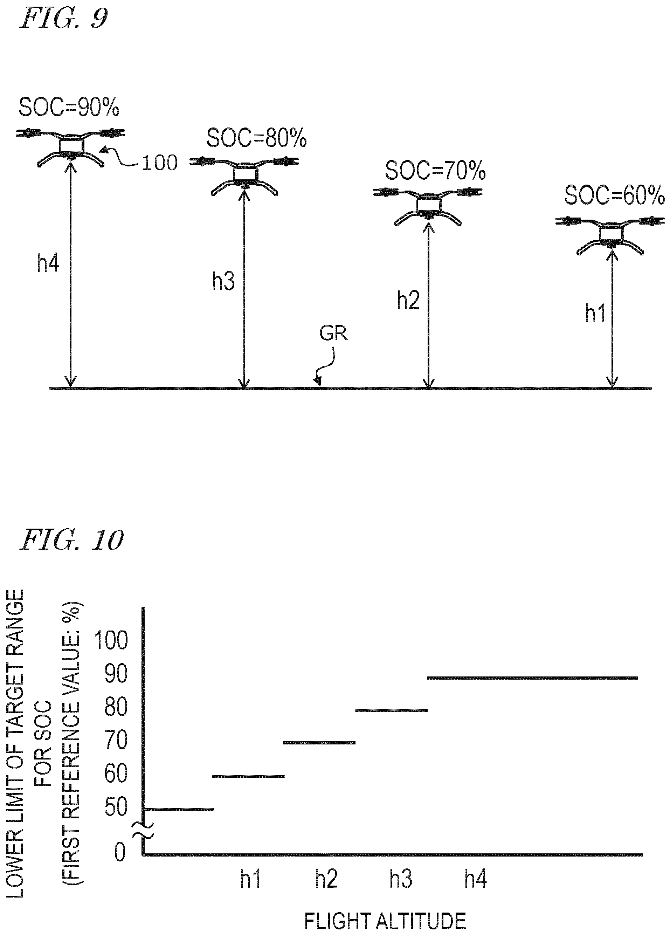

FIG. 9 is a side view schematically showing the lower limit (first reference value) of the target range for the state of charge (SOC) when the height (flight altitude) of the multicopter **100** from the ground **GR** is h4, h3, h2, h1 (where h4 > h3 > h2 > h1 > 0). FIG. **10** is a graph schematically showing an example of the relationship between the height from the ground **GR** of the multicopter **100** and the lower limit (first reference value) of the target range for the state of charge (SOC).

As shown in Figures **9** and **10****,** in this example, the first reference value for the state of charge (SOC) can be decreased as the flight altitude of the multicopter **100** decreases. When the state of charge (SOC) of the battery **52** falls below the first reference value, the battery management device **54** controls the power management device **44** to increase the amount of power generation and executes charging of the battery **52.**

In the example of FIG. **10****,** the first reference value changes stepwise according to the flight altitude, but it may change linearly or curvilinearly. Additionally, in the example of FIG. **10****,** the first reference value for the state of charge (SOC) is 50% or higher, but when the multicopter **100** is flying or performing ground work at low altitude, for example 5 meters or less, the first reference value may be set to, for example, 50% or lower.

The first reference value may be changed between when performing ground work within a target field and when flying to move in areas outside that field.

### <(4) Control of State of charge According to Distance to Landing Point>

The battery management device **54** may control the state of charge of the battery **52** according to the distance from the multicopter **100** to possible landing points.

As described above, the technical significance of controlling the state of charge according to flight altitude utilizes the fact that the power consumption required for the multicopter **100** to descend and land from that flight altitude depends on the flight altitude. However, there may be cases where the multicopter **100** is flying over a position where landing is not possible even when it descends directly downward. In such cases, it is preferable for the multicopter **100** to control the state of charge of the battery **52** based on power consumption that considers the distance to a possible landing point.

In a preferred embodiment, the control device **30** measures or estimates the position (self-position) of the multicopter **100** during flight based on sensor data obtained from the sensors. Then, it may calculate the distance to possible landing locations based on map information and determine the first reference value according to that distance. Such distance calculation is not limited to being performed by the control device **30,** but may be executed by a higher-level computer, a computer at the ground station **6,** or one or more computers connected to the communication network described later. The battery management device **54** of the multicopter **100** may then perform charging processes to achieve the state of charge necessary to fly the distance to the landing point through communication between those computers and the multicopter **100.**

Thus, the preferred target range for parameters such as the state of charge (SOC) or charge amount of the battery **52** may vary not only according to the flight altitude or position of the multicopter **100** but also according to various conditions such as work content. Furthermore, the work content of the multicopter **100** also depends on the type of the implement **200** connected to or towed by the multicopter **100** (such as model name, model number, power consumption, or size). In the present embodiment, target ranges for parameters defining the state of the battery **52** is selected according to various flight conditions or work content, and the battery management device **54** may control charging and discharging.

As mentioned earlier, when charging the battery **52,** the battery management device **54** of the present embodiment may control the amount of power generation by controlling the power management device **44.**

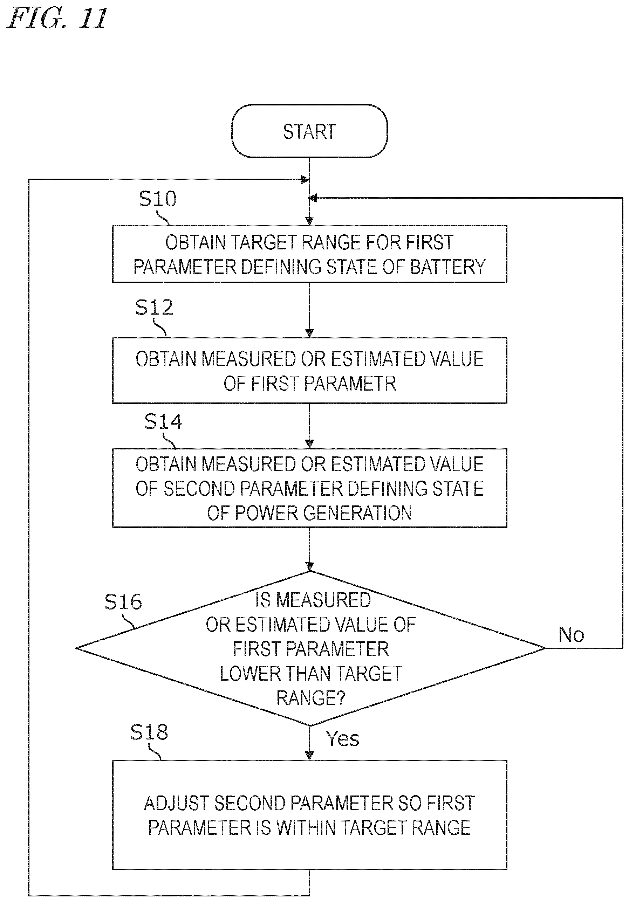

Next, an example of the control of the power management device **44** by the battery management device **54** will be explained with reference to FIG. **11****.**

In step **S10,** the battery management device **54** obtains a target range for parameters (first parameters) that define the state of the battery **52,** such as the state of charge (SOC). The target range may be specified by a first reference value defining the lower limit and a second reference value defining the upper limit. The target range may be provided to the battery management device **54** from the control device **30.** The control device **30** may estimate the required power based on known flight plans or work plans and determine the target range, or it may obtain the target range from a higher-level computer or ground station **6.**

In step **S12,** the battery management device **54** obtains measured or estimated values of the first parameters defining the current state of the battery **52.**

In step **S14,** the battery management device **54** obtains a measured or estimated value of parameter (second parameter) defining the current power generation state. The measured or estimated value of the second parameter may be provided to the battery management device **54** from the power management device **44** or the control device **30.** An example of the second parameter includes power generated per unit time, main rotor drive unit rotation speed (engine speed), and main rotor drive unit output.

In step **S16,** the battery management device **54** determines whether the measured or estimated value of the first parameter is below the target range. When No, return to step **S10.** When Yes, in step **S18,** the battery management device **54** adjusts the second parameter so that the measured or estimated value of the first parameter is within the target range. For example, the battery management device **54** provides an instruction signal to the power management device **44** to increase the amount of power generation. The increase in power generation may be performed in predetermined amount units. Alternatively, the battery management device **54** may instruct the power management device **44** on the amount of increase in power generation.

After the processing in step **S18,** return to step **S10.** In step **S10,** the target range for the first parameter is obtained, but this target range may change dynamically according to the flight status or the work status as described earlier.

The above flow is just one example, and the control of the power management device **44** by the battery management device **54** may be executed by other algorithms.

### <External Power Supply>

The multicopter **100** of the present embodiment includes, as mentioned earlier, a power supply **76** that supplies external power from the battery **52** and electric generator **42** to the implement **200.** For implements **200** used in agricultural applications, appropriate implements may be selected and attached from various types of interchangeable implements according to the planned ground work. Therefore, the drive power (energy consumption per unit time) of the implement **200** strongly depends on the type of the implement **200** connected to the multicopter **100,** in other words, the content of ground work performed by the implement **200** connected to the multicopter **100.** Therefore, in the present embodiment, the "control device" controls the drive power from the power source (the battery **52** and the electric generator **42)** according to the current operation state or planned operation state of the implement **200** connected to the multicopter **100.** This point will be explained in more detail below.

In one preferred embodiment, the control device **30** included in the multicopter **100** is configured to control at least one of: the operation of the internal combustion engine serving as the main rotor driver **24** shown in FIG.**4**, the operation of the motors **14,** the charging and discharging of the battery **52,** and power generation by the electric generator **42,** according to the content of current operation or planned operation of the implement **200.**

For example, the control device **30** may start charging the battery **52** before the start of operation of the implement **200** according to the content of the planned operation of the implement **200.** Such information indicating the planned operations may be obtained from the work plan described earlier. Additionally, the control device **30** may adjust the state of charge or charge amount of the battery **52** according to the content of operation of the implement **200.** Since such operation content of the implement **200** is defined by the work content (work schedule) in the work plan described earlier, the control device **30** may estimate the time variation of power consumption of the implement **200** based on that work schedule. In contrast the content of current operation of the implement **200** during work is defined by the above work plan or instructions received by the control device **30** from the user. Therefore, the control device **30** may increase or decrease the amount of power provided from the power supply **76** to the implement **200** in accordance with increases and decreases in power consumption of the implement **200,** based on the content of current operation or the planned operation of the implement **200.**

The power required by the implement **200** is the power consumed when the implement **200** performs ground work, and is the power consumption of electrical equipment such as an actuator equipped in the implement **200.** Additionally, when the implement **200** is equipped with a battery, this includes the power needed to charge that battery.

Thus, the power supplied from the power supply **76** of the multicopter **100** to the implement **200** depends on the content of operation (operation state) of the implement **200.In** contrast, the power that the multicopter **100** is capable of supplying from the power supply **76** to the implement **200** is determined by the power consumption of the motors **14** equipped in the multicopter **100,** the charging and discharging amount of the battery **52,** and the amount of power generation by the electric generator **42.** The amount of power generation by the electric generator **42** may be adjusted by the operation of the main rotor driver **24.** In the present embodiment, since the control device **30** is configured to control at least one of the operation of the main rotor driver **24,** the operation of the motors **14,** the charging and discharging of the battery **52,** and power generation by the electric generator **42,** it enables appropriate supply of the amount of power required by the implement **200** from the power supply **76** to the implement **200.**

The "control device" mentioned here is not limited to the control device **30** shown in FIG. **4****,** but may include its upper-level computer, computer on the ground station , and/or computer in the cloud. Below, for simplicity, we will explain an example where the control device **30** shown in FIG. **4** controls not only the power source state but also the operation of the main rotor driver **24** and the motor **14.** The control device **30** may supply at least a portion of the power from the battery **52** (first power) and power from the electric generator **42** (second power) as third power from the power supply **46** to the implement **200** using the battery management device **54** and power management device **44.**

The control device **30** may initiate charging of the battery **52** or increase the amount of power generation by the electric generator **42** before the start of operation according to the planned operation content of the implement **200.**

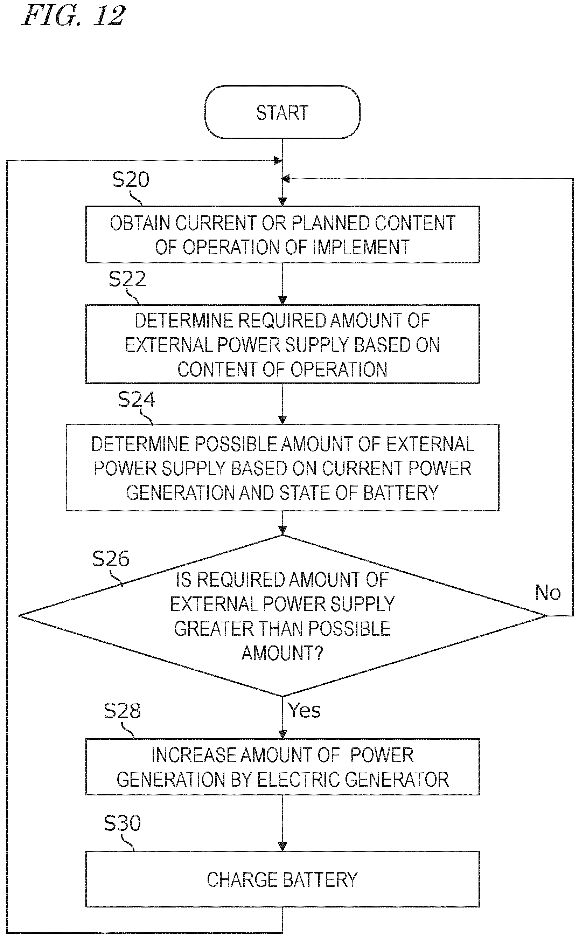

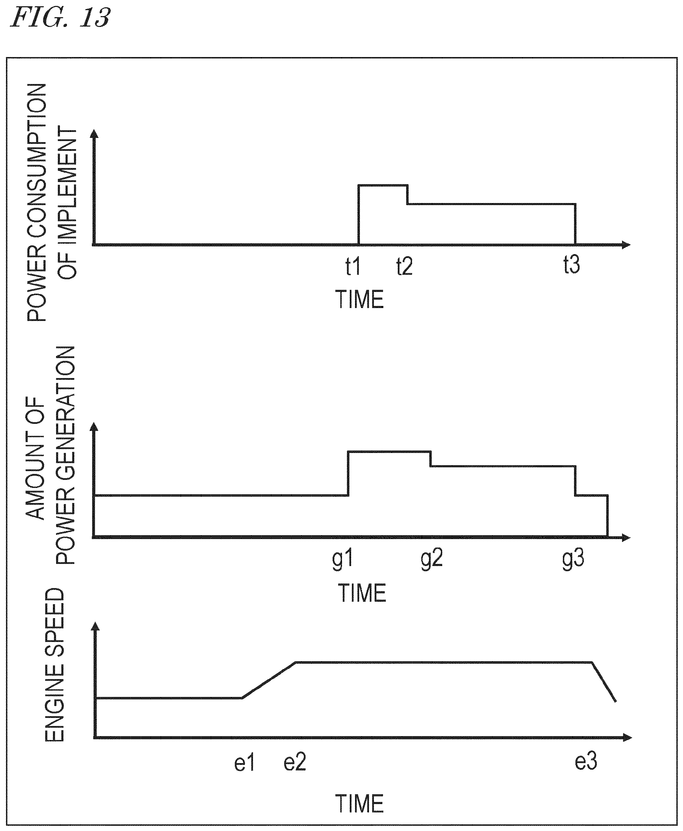

Next, an example of external power supply operation will be explained with reference to FIGs. **12** and **13****.** FIG. **12** is a flowchart showing an example of external power supply operation in the present embodiment. FIG. **13** is a graph showing an example of the relationship between power consumed by planned operations of the implement **200,** the amount of power generation by the electric generator **42,** and engine speed in the present embodiment. Here, "engine speed" corresponds to the number of rotations per unit time (rotational speed) of the output shaft of the internal combustion engine functioning as the main rotor driver **24.**

First, in step **S20,** the control device **30** obtains the content of current or planned operations of the implement **200.** The content of operation of the implement **200** may be obtained from the implement **200** or may be obtained from the work plan stored in the storage device included in the control device **30.** The content of operation of the implement **200** includes the start time of the operation of the implement **200.** Additionally, the content of operation of the implement **200** may include at least one of: type of operation, operation end time, operation duration, power required for operation (power consumption per unit time), and cumulative power amount required until the end of operation. The "power consumption of the implement" shown in FIG. **13** schematically shows power consumption in an example where the implement **200** starts operation at time **t1.** In this example, between time **t1** and time **t2,** the power consumption temporarily indicates a relatively high value, but after time **t2,** it remains at a relatively low value and the operation of the implement **200** stops at time **t3.** The variation of power consumption shown in FIG. **13** is just an example and may vary in various manners depending on the type of the implement **200** and the content of work performed by the implement **200.** Additionally, the operation of the implement **200** may be performed intermittently and repeatedly.

In step **S22,** the control device **30** determines the required amount of external power supply based on the content of operation of the implement **200.** When the operation content of the implement **200** obtained in step **S20** includes only the operation start time, for example, the control device **30** may determine the required amount of external power supply based on a power consumption table for each implement stored in the storage device. When the content of operation of the implement **200** obtained in step **S20** includes information about the power required for operation, that power may be determined as the required amount of external power supply.

In step **S24,** the control device **30** obtains information about the current power generation state (for example, amount of power generation) and battery state (for example, charge amount) from the power management device **44** and the battery management device **54,** and determines the possible amount of external power supply. Even when the current power generation amount is small, if the charge amount of the battery **52** is sufficiently high, the possible amount of external power supply may be high.

In step **S26,** the control device **30** determines whether the required amount of external power supply is greater than the possible amount. When No, return to step **S20.** When Yes, in step **S28,** the control device **30** increases the amount of power generation by the electric generator **42.** In the example of FIG. **13****,** the control device **30** increases the amount of power generation by the electric generator **42** at time **g1,** which is earlier than time **t1.** The control device **30** may vary the amount of power generation increase by the electric generator **42** according to changes in the required amount of external power supply. In the example of FIG. **13****,** the amount of power generation increase is reduced at time **g2** after time **t2,** and the power generation is returned to the pre-increase level at time **g3** after time **t3.**

When increasing the power generation amount, the control device **30** may first increase the engine speed of the main rotor driver **24,** which is an internal combustion engine. The increase in engine speed may not always have a high response speed. In such case, it is preferable to start increasing the engine speed at time **e1,** which is earlier than time **t1** when the implement **200** starts operation, by the length of the response time. As a result, it is possible to reach the engine speed for generating the required amount of power generation at time **e2,** which is earlier than time **t1.** In the example of FIG. **13****,** the engine speed gradually increases between time **e1** and time **e2,** then maintains a constant level, and decreases to the pre-increase level from time **e3.** In this example, the engine speed does not change in response to relatively short-term fluctuations in power consumption of the implement **200.** It is preferable to have fewer changes in engine speed.

Next, proceeding to step **S30,** the control device **30** charges the battery **52** with power **28** generated by the electric generator **42.** The charge amount may be determined based on the required amount of external power supply.

In the above example, the required amount of external power supply (supply power) is determined based on the content of operation of the implement 200, but the algorithm described below may be adopted without performing such processing.

Before the implement **200** starts operation, start charging the battery **52** from the electric generator **42** and increase the state of charge of the battery **52** to a desired level (for example, 90% or higher). In this case, it is preferable that the timing for starting the charging of the battery **52** is such that the charging rate reaches the desired level by the planned time for starting the operation of the implement **200.**

When the planned time for starting the operation of the implement **200** is, for example, immediately after the multicopter **100** starts flying, and when the state of charge of the battery **52** immediately after the multicopter **100** starts up is lower than the desired level, the control device **30** may start charging the battery **52** promptly after startup (for example, before flight begins) and increase the state of charge.

-Before the implement **200** starts operation, increase the power generation amount by the electric generator **42** by a predetermined amount and supply the increased power to the implement **200.** It is preferable that the amount of power generation increase is set to a level equal to or higher than the power required for the operation of the implement **200.** In this case, the operation of the implement **200** does not require power consumption from the battery **52.** When power generation by the electric generator **42** is performed using the driving force of an internal combustion engine with a longer response time than an electric motor, the control device **30** may be configured to start increasing the driving force of the main rotor driver **24,** for example, 1 second, preferably 2 or 3 seconds before the implement **200** starts operation. When part of the increased power generation amount is not needed for the operation of the implement **200,** it may be used for charging the battery **52.**

In flight conditions where it is possible to reduce the thrust of the main rotor **22** (for example, when descending), the power transmitted from the main rotor driver **24** to the main rotor **22** may be reduced, and the ratio of power used for driving the electric generator **42** from the output of the main rotor driver **24** may be increased. By using mechanical devices (such as a clutch) provided between the main rotor **22** and the main rotor driver **24,** the driving force generated by the main rotor driver **24** can be efficiently used to increase the amount of power generation by the electric generator **42.**

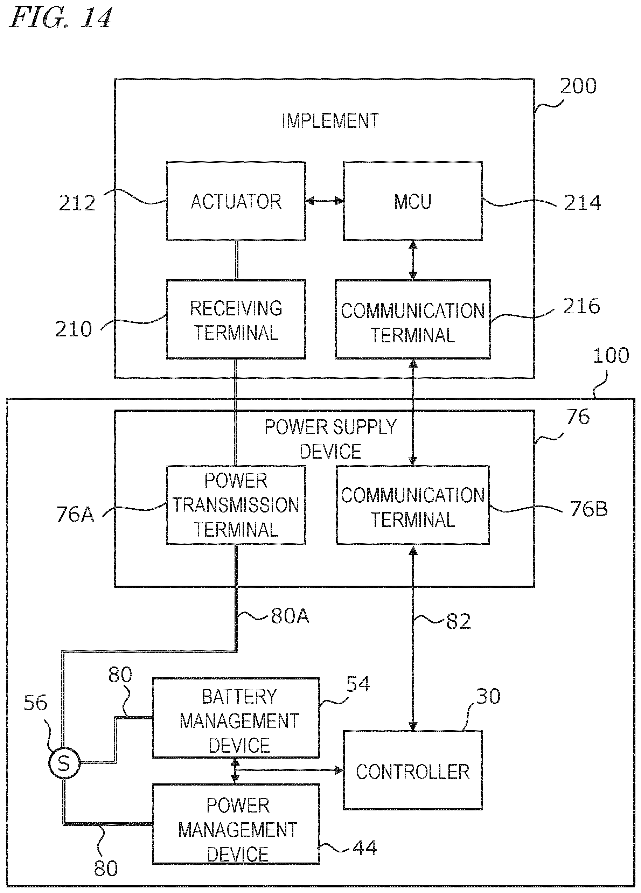

FIG. **14** is a block diagram schematically showing the connection state between the power supply **76** and the implement **200** in the present embodiment.

In the example of FIG. **14****,** the implement **200** includes a power receiving terminal **210** that is electrically connected to the power supply **76,** an actuator **212** for performing ground work (agricultural work), an MCU **214** that controls the actuator **212,** and a communication terminal **216** for communicating with the multicopter **100.** In contrast, the power supply **76** includes a power transmission terminal **76A** that is electrically connected to the power receiving terminal **210** of the implement **200** to supply power, and a communication terminal **76B** for communicating with the implement **200.**

Examples of the actuator **212** include one or more electric motors. The actuator **212** may be configured to drive a pump for spraying agricultural chemicals or fertilizers, or to operate a robot hand. The implement **200** may be equipped with electrical equipment, secondary batteries, sensors, and mechanical parts not shown in FIG. **14****.** The secondary battery of the implement **200** may store part or all of the power received from the power receiving terminal **210** and supply that power not only to the actuator **212** but also to the MCU **214** and other electrical equipment.

Examples of electrical connection between the power receiving terminal **210** and the power transmission terminal **76A** include direct contact enabling conduction, connection via conductive cables or wiring, and connection via wireless power transmission. Examples of electrical connection between communication terminals **216** and **76B** also include direct contact enabling conduction, connection via communication cables or wiring, and connection via wireless communication.

The power receiving terminal **210** and communication terminal **216** may be configured such that the same terminal performs both power reception and communication. Similarly, the power transmission terminal **76A** and communication terminal **76B** may be configured such that the same terminal performs both power transmission and communication.

The control device **30** of the multicopter **100** may obtain information about the power required for the operation of the implement **200** from the MCU **214** of the implement **200** via communication terminals **216** and **76B.** Such information may include information about the operation plan of the implement **200.**

The control device **30** may generate and supply power required for the operation of the implement **200** based on the information obtained from the implement **200.** Note that the implement **200** does not need to be equipped with the MCU **214,** and the control device **30** of the multicopter **100** may be configured to execute part or all of the functions of the MCU **214** of the implement **200.**

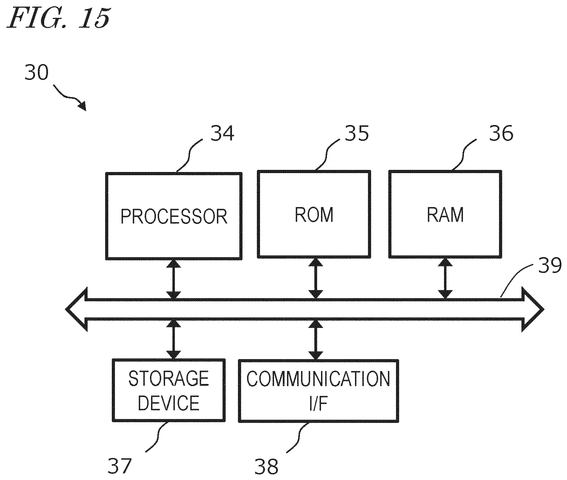

FIG. **15** is a block diagram showing an example of the hardware configuration of the control device **30.** The control device **30** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The term processor **34** is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **30** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **30** may include, as separate components, a flight control device such as the flight controller **32** and an upper-level computer (companion computer). The companion computer may execute each of the aforementioned processes and provide flight-related commands to the flight controller based on the results of those processes.

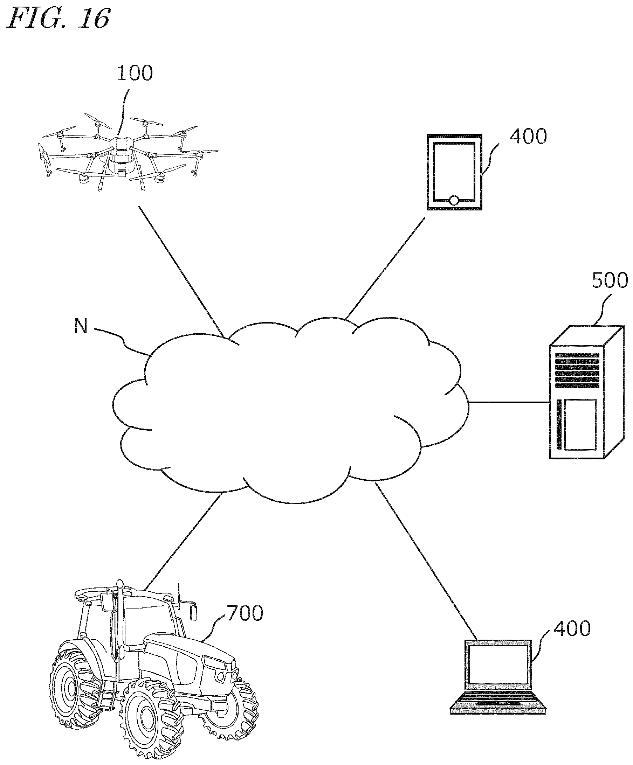

Additionally, one or more servers (computers) **500** or terminal devices (including portable and fixed types) **400** connected to the communication device of the multicopter **100** via a communication network **N,** as shown in FIG. **16****,** may execute part or all of the functions of the control device **30.** The agricultural machine **700** such as tractors may be connected to this communication network **N,** and communication may be performed between the multicopter **100** and the agricultural machine **700.** Through the communication network **N,** part of the data used for processing by the control device **30** and control signals for the multicopter **100** may be provided to the multicopter **100** from the agricultural machine **700.**

In the unmanned aerial vehicle according to the above embodiment, the "attitude control device" includes a plurality of electric motors, and the "main thrust generating device" includes an internal combustion engine. In other words, the unmanned aerial vehicle according to the above embodiment includes the rotation drive device **3D** shown in FIG. **1A****.** However, even with the rotation drive devices **3A, 3B,** and **3C** shown in FIG. **1A****,** an unmanned aerial vehicle including both an "attitude control device" and a "main thrust generating device" can be realized by making some motors **14** or power transmission systems **23** different from other motors **14** or power transmission systems **23.**

Additionally, the unmanned aerial vehicle may be includes a plurality of internal combustion engines having different outputs and response speeds. In such a case, the internal combustion engine with relatively low output and relatively high response speed may constitute the "attitude control device," while the internal combustion engine with relatively high output and relatively low response speed may constitute the "main thrust generating device".

### INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

### REFERENCE SIGNS LIST

**2**... rotor (propeller), **3**...rotation drive device, **4**...main body, **4a**...control device, **4b**...sensors, **4c**...communication device, **5**...body frame, **10**...multicopter, **12**...sub-rotor, **12a**...propeller, **12b**...propeller, **14**...motor, **16**...ESC, **22**...main rotor, **52**...battery, **54**...battery management device

## Claims

1. An unmanned aerial vehicle comprising a plurality of rotors, the unmanned aerial vehicle comprising:
a plurality of first rotors included in the plurality of rotors;
at least one second rotor included in the plurality of rotors;
a plurality of electric motors, each configured to drive a respective one of the plurality of first rotors;
an internal combustion engine to drive the at least one second rotor;
a battery to store first electric power;
an electric generator that is driven by the internal combustion engine to generate second electric power; and
a first power control device to control charging and discharging of the battery;
and
a second power control device to control power generation by the electric generator,
wherein each of the plurality of electric motors receives at least one of the first electric power and the second electric power, and
wherein the first power control device controls the second power control device.

2. The unmanned aerial vehicle according to Claim 1, wherein the first power control device controls the second power control device according to a state of the battery.

3. The unmanned aerial vehicle according to Claim 1, further comprising:
wiring that connects the plurality of electric motors to the electric generator and the battery,
wherein the first power control device controls electrical connection between the wiring and the battery.

4. The unmanned aerial vehicle according to any one of Claims 1 to 3, wherein the first power control device controls the second power control device to adjust an amount of the power generation according to work content of the unmanned aerial vehicle.

5. The unmanned aerial vehicle according to any one of Claims 1 to 3, wherein the first power control device controls a state of charge of the battery according to flight conditions including flight altitude of the unmanned aerial vehicle.

6. The unmanned aerial vehicle according to any one of Claims 1 to 5, wherein the first power control device controls a state of charge of the battery according to a distance from the unmanned aerial vehicle to a possible landing point.

7. The unmanned aerial vehicle according to any one of Claims 1 to 3, comprising a control device that functions as both the first power control device and the second power control device.
